# FASCICULE DE BREVET EUROPEEN

(11) **EP 0 949 516 B1**
(45) Date de publication et mention de la délivrance du brevet: **16.07.2008**
(21) Numéro de dépôt: 99400852.2
(22) Date de dépôt: 08.04.1999
(51) Int. Cl.: G02B 6/122, G02B 6/42

(54) **Procédé électrooptique de traitement de signaux, dispositif pour la mise en oeuvre de celui-ci et utilisation**
Elektrooptisches Verfahren zur Signalverarbeitung, Vorrichtung zur Durchführung des Verfahrens und Anwendung
Electrooptical method for signal processing, device for carrying out the method and use thereof

(30) Priorité: 10.04.1998 FR 9804557
(43) Date de publication de la demande: 13.10.1999
(73) Titulaire: Fahrenheit Thermoscope LLC, Las Vegas, NV 89119 (US)
(72) Inventeur: Ferrieu, Frédéric, 38700 Corenc (FR)
(74) Mandataire: Texier, Christian

(56) Documents cités:
- US-A- 5 625 729
- US-A- 5 652 816
- CHOUTEAU S ET AL: "OPTOELECTRONIC MICROSWITCH ON SOI BASED STRUCTURE" 1995 IEEE INTERNATIONAL SOI CONFERENCE PROCEEDINGS, TUCSON, OCT. 3 - 5, 1995, 3 octobre 1995 (1995-10-03), page 40/41 XP000590645 INSTITUTE OF ELECTRICAL AND ELECTRONICS ENGINEERS
- A. BORGHESI ET AL.: "Influence of roughness and grain dimension on the optical functions of polycrystalline silicon films" THIN SOLID FILMS, no. 313-314, février 1998 (1998-02), pages 243-247, XP004132992

## Description

La présente invention concerne le domaine de l'optoélectronique.

De nombreux systèmes étudiés aujourd'hui dans les laboratoires ou exploités commercialement combinent des composants électroniques à semi-conducteur et des composants assurant une fonction de guidage d'un faisceau optique, émis par exemple par les composants électroniques, ou encore appliqués à ceux-ci à des fins de commande ou de traitement.

Le document US-A-5,625,729 décrit un dispositif optoélectronique destiné à assurer un couplage entre une onde optique externe et une onde optique locale. L'onde optique locale est supportée par une pluralité d'électrodes et une structure associée aux électrodes. Les électrodes sont espacées sous forme d'un réseau sensiblement régulier et sont adaptées pour deux fonctions. Premièrement, les électrodes opèrent un couplage résonant entre l'onde externe et l'onde locale. Deuxièmement les électrodes permettent une différence de potentiel entre les électrodes adjacentes.

Le domaine de l'optoélectronique a ainsi déjà donné lieu à une littérature très abondante.

Cependant, à la connaissance de la Demanderesse, ce domaine n'a pas connu d'évolution marquante ces dernières années.

La présente invention basée sur le résultat d'expérimentations a pour but de proposer de nouveaux moyens présentant des performances améliorées par rapport aux systèmes antérieurs connus.

Un but principal de la présente invention est notamment de proposer des moyens qui permettent d'optimiser le couplage d'un faisceau optique sur une structure semi-conductrice, sans exiger l'utilisation de compositions semi-conductrices ou d'une technologie délicates à mettre en oeuvre.

Ce but est atteint dans le cadre de la présente invention grâce à un procédé tel que défini en revendication 1 annexée.

Selon une autre caractéristique avantageuse de l'invention, ledit ensemble superposé au substrat comprend la couche guidante et au moins une couche interposée entre le substrat et cette couche guidante et qui présente un indice de réfraction inférieur à celui de la couche guidante, à la longueur d'ondes du rayonnement optique appliqué.

Comme on le comprendra à la lecture de la description détaillée qui va suivre, la présente invention permet notamment d'assurer des interconnexions très rapides entre des composants électroniques tout en assurant une parfaite isolation électrique entre ceux-ci.

La présente invention concerne également un dispositif pour la mise en oeuvre de ce procédé.

D'autres caractéristiques, buts et avantages de la présente invention apparaîtront à la lecture de la description détaillée qui va suivre et en regard des dessins annexés, donnés à titre d'exemples non limitatifs et sur lesquels :
- la figure 1 représente schématiquement une structure de dispositif conforme à la présente invention,
- les figures 2 et 3 illustrent schématiquement des courbes expérimentales à la base de l'invention, et
- la figure 4 représente la partie réelle (courbe de cercles) et la partie imaginaire (courbe de triangles) de la fonction diélectrice (ε = n²) d'une couche de SiO2 utilisée par exemple en tant que couche sous-jacente à la couche guidante.

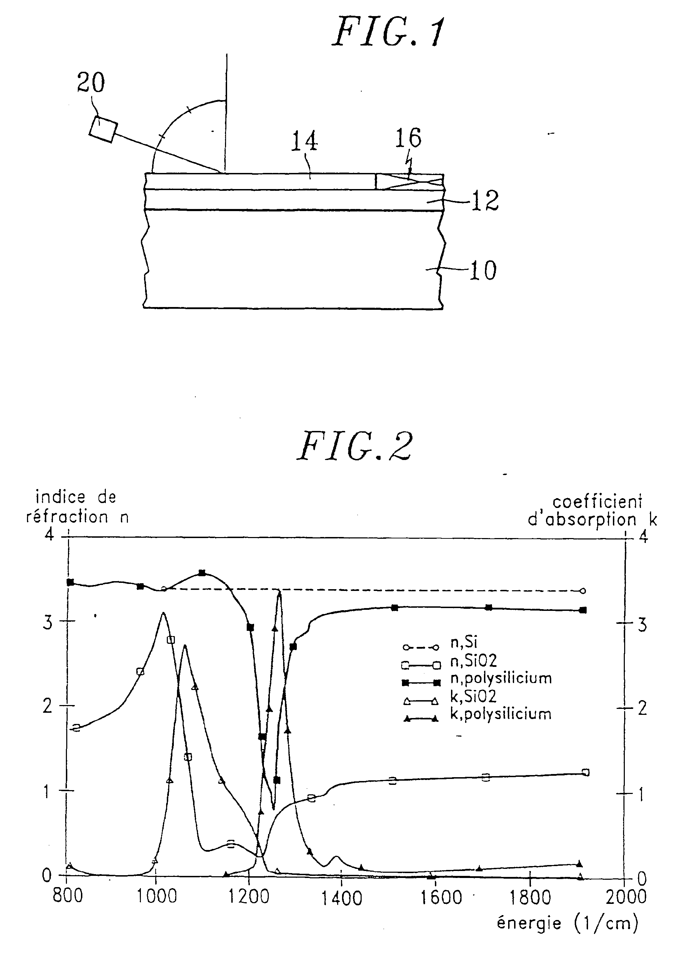

On a représenté sur la figure 1 annexée, un dispositif optoélectronique comprenant un substrat 10 en matériau semi-conducteur, par exemple à base de silicium, et superposées sur celui-ci, successivement une première couche 12 en un matériau semi-isolant, par exemple en oxyde de silicium SiO2 et une seconde couche 14 formant couche guidante, par exemple en polysilicium. Sur la figure 1, on a également illustré dans le prolongement de la seconde couche 14, sous la référence 16, un composant électronique susceptible d'être associé à la couche guidante 14, par exemple sous forme d'un transistor MOS (Metal Oxyde Semiconductor) formé dans le prolongement de la couche guidante 14.

On a par ailleurs illustré sur la figure 1, sous la référence 20, des moyens aptes à appliquer sur la couche guidante 14 un rayonnement lumineux de longueur d'ondes et selon une incidence A choisies de telle sorte que la couche guidante 14 présente à cette longueur d'ondes et à cette incidence A un pic d'absorption propre à permettre un guidage du rayonnement lumineux dans la couche guidante 14.

Plus précisément encore l'inventeur a déterminé que pour une structure de technologie MOS classique, comprenant une couche guidante 14 en polysilicium, déposée par exemple par CVD sur une couche sous jacente 12 en oxyde de silicium, de préférence le rayonnement appliqué par les moyens 20 sur la couche guidante 14, a une longueur d'onde de l'ordre de 8µm sous une incidence A comprise entre 70 et 76°.

L'inventeur a en effet déterminé que dans ces conditions le rayonnement est guidé dans la couche de polysilicium 14. Avec cette incidence, l'onde pénètre dans la couche guidante sous un angle d'environ 16° qui est l'angle critique de propagation en mode guidé dans la polysilicium. En revanche en dehors de cette plage de paramètre, la lumière n'est pas guidée.

A titre d'exemple non limitatif, on peut utiliser un laser à cascade quantique du type décrit dans le document Applied Physics Letters, vol. 72, n° 12, Mars 1998, C. Gmachl et al, "Continuous - wave and high - power pulsed operation of index - coupled distributed feedback quantum cascade laser at λ ≈ 8,5µm", en tant que moyens 20.

Plus précisément encore, la couche de polysilicium 14 formant couche guidante a de préférence une épaisseur de l'ordre de 200 à 400 nm, tandis que la couche d'oxyde sous-jacente 12 a une épaisseur au moins égale à 10nm.

La présente invention permet ainsi de guider efficacement une onde infrarouge monochromatique dans un film de polysilicium obtenu avec une technologie classique.

Comme on le précisera par la suite, la présente invention peut trouver de nombreuses applications.

Elle permet par exemple d'assurer une commande optique simultanée de plusieurs transistors par exemple de type MOS isolés électriquement entre eux et par rapport au guide d'onde, grâce à un tel film en polysilicium.

Elle permet également d'assurer le déclenchement par voie optique d'un transistor par un autre, sans qu'il y ait contact électrique entre eux : dans ce cas le transistor déclenché reçoit un signal de commande optique de commande en provenance du transistor déclencheur via la couche guidante précitée. Cette application permet par exemple d'utiliser deux transistors portés à des tensions différentes ou encore situés dans des blocs de circuits différents.

Ainsi par exemple sur une structure MOS standard, c'est à dire avec une grille en SiO2 (d'épaisseur supérieure à 1nm, nitrurée ou non) et un matériau de grille en silicium amorphe, poly ou mono-cristallin) empilée ou non avec du Ge, on peut modifier l'état du transistor par de la lumière aux longueurs d'onde adaptées et en attaquant la surface sous un angle donné.

La lumière transmise, en sus de modifier l'état du transistor, peut aussi être guidée dans la couche de matériau de grille et agir sur un (ou plusieurs) autre(s) transistor(s) sans qu'il y ait contact électrique entre les transistors (ce qui est impossible à réaliser dans les architectures classiques de dispositifs connus).

L'inventeur a par ailleurs déterminé que l'effet de guidage exploité dans le cadre de la présente invention est dû à une interférence optique résonante liée à l'onde évanescente qui existe au niveau des deux interfaces de la couche de polysilicium.

Cette onde évanescente résonante se propage longitudinalement dans la couche de polysilicium.

Ceci résulte du fait que en respectant les paramètres de longueur d'onde et d'incidence précités, la couche guidante 14 est prise en sandwich entre deux couches encadrantes (la couche 12 et l'air ou une autre couche similaire à la couche 12) présentant des indices de réfraction inférieurs à celui de la couche guidante 14.

La présente invention permet ainsi d'obtenir les conditions propres à assurer un confinement de la lumière dans la couche guidante 14, sans exiger des couches guidantes d'épaisseur importante.

De ce fait la présente invention permet notamment une parfaite compatibilité entre la technologie planar d'un transistor MOS et la technologie de réalisation de la couche guidante 14. La présente invention permet notamment de supprimer les différences de niveau existant dans certains systèmes proposés dans l'état de la technique, entre les couches guidantes et les structures semi-conductrices.

Bien entendu la présente invention n'est pas limitée aux modes de réalisation particuliers qui viennent d'être décrits, mais s'étend à toutes variantes conformes à son esprit.

La présente invention peut s'appliquer à des structures semiconductrices, notamment à base de polysilicium, quelle que soit l'état cristallin de celles-ci : amorphe, micro-cristallin ou mono-cristallin (cas du silicium sur isolant).

La présente invention peut s'appliquer également à des structures à base de germanium.

La technologie de la couche 12 sous-jacente à la couche guidante 14 peut faire l'objet de nombreuses variantes de réalisation. Il peut s'agir par exemple d'une couche d'oyde obtenue par oxydation en phase sèche (sous O2) ou humide (O2 + H2) ou encore par dépôt CVD assisté ou non plasma ou UV.

Il peut s'agir encore d'une couche sous-jacente 12 à base de nitrure (Si3N4). Dans ce cas cependant la longueur d'onde retenue est de préférence de l'ordre de 9µm.

La présente invention peut par exemple également trouver application dans des filtres ou matériaux photoniques.

A titre d'exemple non limitatif, dans le cadre d'un filtre, on peut utiliser un transistor qui selon l'incidence d'attaque d'une couche guidante associée et de la longueur d'onde associée, sera ou non déclenché.

De la même façon la présente invention peut trouver application dans des systèmes adaptés pour assurer le déclenchement d'un transistor uniquement après combinaison de deux ou plusieurs longueurs d'onde, ce qui permet une logique optique de commande (la combinaison des longueurs d'onde qui attaquent la structure) avec effet électrique (modification de l'état électrique de la grille, donc du transistor avec guidage ou non pour action sur un autre transistor).

La présente invention peut également trouver application dans la fabrication de cristaux photoniques par gravure plasma de structures résonantes qui dépendent de la longueur d'onde de la lumière propagée et du pas du réseau.

Sur la figure 1 annexée on a illustré une structure dans laquelle la couche guidante 14 reçoit directement le rayonnement sur sa surface. En variante on peut envisager d'attaquer cette couche guidante 14 en bout, ou encore au niveau d'une fenêtre ménagée dans une couche de confinement superposée, par exemple une couche similaire à la couche sous-jacente 12.

Sur la figure 2 annexée qui est à la base de la présente invention, on a illustré l'évolution de l'indice de réfraction n et du coefficient d'absorption k en fonction de l'énergie (1/cm) du rayonnement appliqué, mesurés sur une structure comprenant une couche guidante 14 de polysilicium de 200nm déposée sur une couche de SiO2. Plus précisément sur la figure 2 on a illustré :
- sous un trait interrompu l'indice de réfraction n du silicium,
- sous un trait de carrés vides l'indice de réfraction n de SiO2,
- sous un trait de carrés pleins l'indice de réfraction n du polysilicium,
- sous un trait de triangles vides le coefficient d'absorption de SiO2,
- sous un trait de triangles pleins le coefficient d'absorption du polysilicium.

La figure 2 révèle un pic d'absorption dans la couche guidante de polysilicium 14 pour E de l'ordre de 1260 cm-1.

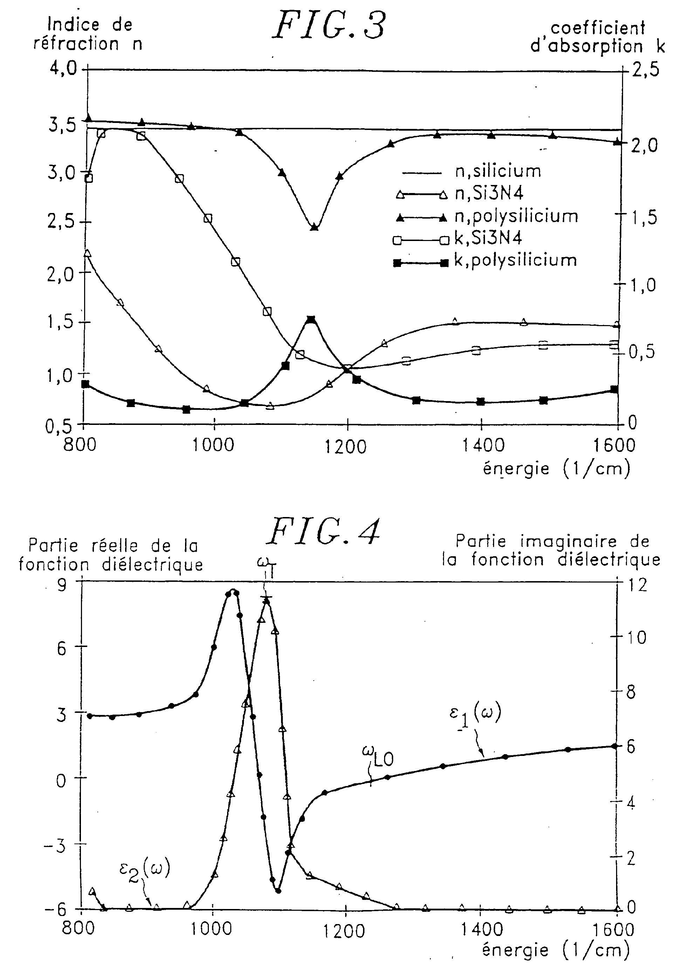

La figure 3 représente des courbes similaires pour une structure dans laquelle la couche de SiO2 est remplacée par une couche de nitrure Si3N4 déposée sur un substrat de silicium.

Plus précisément sur la figure 3 on a illustré :
- sous un trait continu l'indice de réfraction n du silicium,
- sous un trait de triangles vides l'indice de réfraction n de Si3N4,
- sous un trait de triangles pleins l'indice de réfraction n du polysilicium,
- sous un trait de carrés vides le coefficient d'absorption de Si3N4, et
- sous un trait de carrés pleins le coefficient d'absorption du polysilicium.

La figure 3 révèle un pic d'absorption dans la couche guidante de polysilicium 14 pour E de l'ordre de 1130 cm-1.

L'inventeur a par ailleurs déterminé qu'il est souhaitable de respecter les conditions suivantes :
1) la couche guidante (14) possède un indice n élevé, typiquement de l'ordre de 3 à 4 et un coefficient d'absorption nul k = 0, et
2) la longueur d'onde ω du rayonnement optique exprimée en cm⁻¹ est comprise entre la fréquence transversale ω_{T} et la fréquence longitudinale ω_{LO} de la couche 12 sous jacente à la couche guidante 14.
soit : ε₁ (ω)<O et ω_{T} <ω<ω_{LO},
relations dans lesquelles :
ω_{T} correspond à la valeur maximale de ε₂,
ε₂ représentant la partie imaginaire de la fonction diélectrique, et
ω_{LO} correspond à la valeur nulle de ε₁,
ε₁ représentant la partie réelle de la fonction diélectrique.

En respectant cette condition, on se place dans la bande dite "reststrahlen".

Les valeurs ω_{T} et ω_{LO} sont identifiées sur la figure 4.

On trouvera des définitions de ω_{T} et ω_{LO} dans les documents "Optical Properties of Thin Films and the Berreman Effect" B. Harbecke et al. Appl. Phys. A38 263-267 (1985) et "Infrared Absorption Bands at Polar Congitudinal Optic Mode Frequencies in lubic Crystal Films", D.W. Berreman, Phys. Rev. 130, 2193-2198 (1963).

Dans le cadre de la présente invention, on peut également envisager de disposer des électrodes sur une zone de la couche guidante 14 en polysilicium dopé pour créer un effet de photo-modulation liée à la présence de porteurs libres présents dans la couche de polysicilium dopé. Une modulation électrique induit une modulation d'indice par effet des porteurs libres. Et cet effet est d'autant plus fort que l'intervalle de longueurs d'ondes est voisin de la fréquence plasmon associée.

Par ailleurs la délimitation de zones à niveau de dopage élévé, positionnnées sur la partie guidante 14 permet la création d'une cavité résonante facilement associable à un laser SiGe type cascade accordé à cette longueur d'onde.

## Revendications

1. Procédé de couplage optique dans un guide d'onde comprenant les étapes consistant à :
- fournir au moins un composant semi-conducteur constitué au moins d'un substrat (10) et d'un ensemble superposé comprenant au moins une couche guidante (14) dans lequel la couche guidante (14) est en polysilicium, déposée sur une couche sous jacente (12) en oxyde de silicium, la couche guidante (14) ayant une épaisseur de l'ordre de 200 à 400 nm, tandis que la couche sous-jacente (12) a une épaisseur au moins égale à 10nm, et
- appliquer sur la couche guidante (14) un rayonnement optique àune longueur d'onde de l'ordre de 9µm sous une incidence (A) comprise entre 70 et 76° de telle sorte que ledit ensemble présente à cette longueur d'ondes et à cette incidence un pic d'absorption spécifique propre à permettre le guidage dudit rayonnement optique dans la couche guidante (14).

2. Procédé de couplage optique dans un guide d'onde comprenant les étapes consistant à :
- fournir au moins un composant semi-conducteur constitué-au moins d'un substrat (10) et d'un ensemble superposé comprenant au moins une couche guidante (14) dans lequel la couche guidante (14) est en polysilicium, déposée sur une couche sous jacente (12) en nitrure de silicium, la couche guidante (14) ayant une épaisseur de l'ordre de 200 à 400 nm, tandis que la couche sous-jacente (12) a une épaisseur au moins égale à 10nm,
- appliquer sur la couche guidante (14) un rayonnement optique une longueur d'onde de l'ordre de 9µm sous une incidence (A) comprise entre 70 et 76° de telle sorte que ledit ensemble présente à cette longueur d'ondes et à cette incidence un pic d'absorption spécifique propre à permettre le guidage dudit rayonnement optique dans la couche guidante (14).

3. Procédé selon l'une des revendications 1 ou 2, **caractérisé par le fait que** ledit ensemble (12, 14) superposé au substrat (10) comprend la couche guidante (14) et au moins une couche (12) interposée entre le substrat (10) et cette couche guidante (14) et qui présente un indice de réfraction inférieur à celui de la couche guidante (14), à la longueur d'ondes du rayonnement optique appliqué.

4. Procédé selon l'une des revendications 1 à 3, **caractérisé par le fait que** la couche guidante (14) possède un indice n élevé, typiquement de l'ordre de 3 à 4

5. Procédé selon l'une des revendications 1 à 4, **caractérisé par le fait que** la longueur d'onde ω du rayonnement optique exprimée en cm⁻¹ est comprise entre la fréquence transversale ω_{T} et la fréquence longitudinale ω_{LO} de la couche (12) sous-jacente à la couche guidante (14), soit ε₁ (ω)<O et ω_{T} < ω <ω_{LO}.

6. Dispositif pour la mise en oeuvre du procédé conforme à l'une des revendications 1 à 5, comprenant:
- au moins un composant semi-conducteur constitué au moins d'un substrat (10) et d'un ensemble superposé comprenant au moins une couche guidante (14) dans lequel la couche guidante (14) est en polysilicium, déposée sur une couche sous jacente (12) en oxyde de silicium, la couche guidante (14) ayant une épaisseur de l'ordre de 200 à 400 nm, tandis que la couche sous-jacente (12) a une épaisseur au moins égale à 10nm, et
- des moyens aptes à appliquer sur la couche guidante (14) un rayonnement optique à la couche guidante (14) est en polysilicium, déposée sur une couche sous jacente (12) en nitrure de silicium, la couche guidante (14) ayant une épaisseur de l'ordre de 200 à 400 nm, tandis que la couche sous-jacente (12) a une épaisseur au moins égale à 10nm, de telle sorte que ledit ensemble présente à cette longueur d'ondes et à cette incidence un pic d'absorption spécifique propre à permettre le guidage dudit rayonnement optique dans la couche guidante (14).

7. Dispositif pour la mise en oeuvre du procédé conforme à l'une des revendications 1 à 5, comprenant:
- au moins un composant semi-conducteur constitué au moins d'un substrat (10) et d'un ensemble superposé comprenant au moins une couche guidante (14) dans lequel la couche guidante (14) est en polysilicium, déposée sur une couche sous jacente (12) en nitrure de silicium, la couche guidante (14) ayant une épaisseur de l'ordre de 200 à 400 nm, tandis que la couche sous-jacente (12) a une épaisseur au moins égale à 10nm, et
- des moyens aptes à appliquer sur la couche guidante (14) un rayonnement optique àune longueur d'onde de l'ordre de 9µm sous une incidence (A) comprise entre 70 et 76° de telle sorte que ledit ensemble présente à cette longueur d'ondes et à cette incidence un pic d'absorption spécifique propre à permettre le guidage dudit rayonnement optique dans la couche guidante (14).

8. Dispositif selon l'une des revendications 6 ou 7, **caractérisé par le fait que** ledit ensemble (12, 14) superposé au substrat (10) comprend la couche guidante (14) et au moins une couche (12) interposée entre le substrat (10) et cette couche guidante (14) et qui présente un indice de réfraction inférieur à celui de la couche guidante (14), à la longueur d'ondes du rayonnement optique appliqué.

9. Dispositif selon l'une des revendications 6 à 8, **caractérisé par le fait que** la couche guidante (14) possède un indice n élevé, typiquement de l'ordre de 3 à 4.

10. Dispositif selon l'une des revendications 6 à 9, **caractérisé par le fait que** la longueur d'onde ω du rayonnement optique exprimée en cm⁻¹ est comprise entre la fréquence transversale ω_{T} et la fréquence longitudinale ω_{LO} de la couche (12) sous-jacente à la couche guidante (14), soit ε₁ (ω) < 0 et ω _{T} < ω <ω_{LO}.

11. Dispositif selon l'une des revendications 6 à 10, **caractérisé par le fait qu'**il comprend des électrodes déposées sur une zone de la couche guidante (14) pour créer un effet de photo-modulation liée à la présence de porteurs libres présents dans la couche guidante.

## Claims

1. A method for optical coupling in a wave guide comprising the steps of :
providing at least one semiconductor component including a substrate (10) and a superposed assembly, said superposed assembly comprising at least one guiding layer (14), wherein said guiding layer (14) is made of polysilicon, deposited on subjacent layer (12) of silicon oxide, said guiding layer (14) having a thickness of about 200 to 400nm, while said subjacent layer has a thickness of at least 10nm, and
applying, to said guiding layer (14) optical radiation at a wavelength of about 8µm at an angle of incidence (A) of between 70 and 76° such that said superposed assembly has, at the wavelength and at the angle of incidence, a specific absorption peak suitable for allowing said optical radiation to be guided in said guiding layer (14).

2. A method for optical coupling in a wave guide comprising the steps of :
providing at least one semiconductor component including a substrate (10) and a superposed assembly, said superposed assembly comprising at least one guiding layer (14), wherein said guiding layer (14) is made of polysilicon, deposited on subjacent layer (12) of silicon nitride, said guiding layer (14) having a thickness of about 200 to 400nm, while said subjacent layer has a thickness of at least 10nm, and
applying, to said guiding layer (14) optical radiation at a wavelength of about 9µm at an angle of incidence (A) of between 70 and 76° such that said superposed assembly has, at the wavelength and at the angle of incidence, a specific absorption peak suitable for allowing said optical radiation to be guided in said guiding layer (14).

3. Method according to one of claims 1 or 2, wherein said assembly (12, 14) superposed to the substrate (10) comprises the guiding layer (14) and at least one additional layer (12), interposed between said substrate (10) and said guiding layer (14), said additional layer having a refractive index of less than that of said guiding layer (14) at the wavelength of said optical radiation.

4. Method according to one of claims 1 to 3, wherein said guiding layer (14) has a high refractive index n between about 3 to 4.

5. Method according to one of claims 1 to 4, wherein the wavelength ω of said optical radiation expressed in cm⁻¹ is between the transverse frequencyω*_{T}* and the longitudinal frequency ω*_{LO}* of said layer (12) subjacent the guiding layer (14) such that ε₁ (ω)<O and ω _{T} < ω <ω_{LO}.

6. A device for implementing the method in accordance with one of claims 1 to 5 comprising :
at least one semiconductor component including a substrate (10) and a superposed assembly, said superposed assembly comprising at least one guiding layer (14) wherein said guiding layer (14) is made of polysilicon, deposited on a subjacent layer (12) of silicon oxide, said guiding layer having thickness of about 200 to 400nm, while said subjacent layer has a thickness of at least 10nm, and
means applying, to said guiding layer (14) optical radiation at a wavelength of about 8µm at an angle of incidence (A) of between 70 and 76° such that said superposed assembly has, at the wavelength and at the angle of incidence, a specific absorption peak suitable for allowing said optical radiation to be guided in said at least one guiding layer (14).

7. A device for implementing the method in accordance with one of claims 1 to 5 comprising :
at least one semiconductor component including a substrate (10) and a superposed assembly, said superposed assembly comprising at least one guiding layer (14) wherein said guiding layer (14) is made of polysilicon, deposited on a subjacent layer (12) of silicon nitride, said guiding layer having thickness of about 200 to 400nm, while said subjacent layer has a thickness of at least 10nm, and
means applying, to said guiding layer (14) optical radiation at a wavelength of about 9µm at an angle of incidence (A) of between 70 and 76° such that said superposed assembly has, at the wavelength and at the angle of incidence, a specific absorption peak suitable for allowing said optical radiation to be guided in said at least one guiding layer (14).

8. A device according to one of claims 6 or 7, wherein said assembly (12, 14) superposed to the substrate (10) comprises the guiding layer (14) and at least one layer (12) interposed between said substrate (10) and said guiding layer (14) and that has a refractive index of less than that of said at least one guiding layer (14), at said wavelength of said optical radiation.

9. A device according to one of claims 6 to 8, wherein said at least one guiding layer (14) has a high index n, of about 3 to 4.

10. A device according to one of claims 6 to 9, wherein the wavelength ω of said optical radiation expressed in cm⁻¹ is between the transverse frequency ω*_{T}* and the longitudinal frequency ω*_{LO}* of a layer (12) subjacent the guiding layer (14) such that ε₁ (ω)<O and ω _{T} < ω <ω_{LO}.

11. A device according to one of claims 6 to 10, further comprising electrodes deposited on a region of said guiding layer (14) in order to create a photomodulation effect associated with the presence of free carriers present in said at least one guiding layer.

## Patentansprüche

1. Optisches Kopplungsverfahren in einem Wellenleiter, die Schritte umfassend, die darin bestehen:
- Bereitstellung mindestens eines Halbleiter-Bauteils, das mindestens von einem Substrat (10) und einem überlagerten Ensemble gebildet wird, das mindestens eine Führungsschicht (14) umfasst, und wobei die Führungsschicht (14) aus Polysilizium ist und auf einer darunter liegenden Schicht (12) aus Siliziumoxid abgelagert, wobei die Führungsschicht (14) eine Dicke in der Größenordnung von 200 bis 400 nm hat, währenddessen die darunter liegende Schicht (12) eine Dicke von mindestens gleich 10 nm hat,
- Ausüben auf die Führungsschicht (14) einer optischen Strahlung mit einer Wellenlänge in der Größenordnung von 8 µm unter einem Einfall (A) zwischen 70 und 76° inklusive, so dass das Ensemble bei dieser Wellenlänge und diesem Einfall einen spezifischen Absorptionspeak aufweist, der geeignet ist, die Führung der optischen Strahlung in der Führungsschicht (14) zu erlauben.

2. Optisches Kopplungsverfahren in einem Wellenleiter, die Schritte umfassend, die darin bestehen:
- Bereitstellung mindestens eines Halbleiter-Bauteils, das mindestens von einem Substrat (10) und einem überlagerten Ensemble gebildet wird, das mindestens eine Führungsschicht (14) umfasst, und wobei die Führungsschicht (14) aus Polysilizium ist und auf einer darunter liegenden Schicht (12) aus Siliziumnitrid abgelagert, wobei die Führungsschicht (14) eine Dicke in der Größenordnung von 200 bis 400 nm hat, währenddessen die darunter liegende Schicht (12) eine Dicke von mindestens gleich 10 nm hat,
- Ausüben auf die Führungsschicht (14) einer optischen Strahlung mit einer Wellenlänge in der Größenordnung von 9 µm unter einem Einfall (A) zwischen 70 und 76° inklusive, so dass das Ensemble bei dieser Wellenlänge und diesem Einfall einen spezifischen Absorptionspeak aufweist, der geeignet ist, die Führung der optischen Strahlung in der Führungsschicht (14) zu erlauben.

3. Verfahren nach einem der Ansprüche 1 oder 2, **dadurch gekennzeichnet, dass** das dem Substrat (10) überlagerte Ensemble (12, 14) die Führungsschicht (14) und mindestens eine zwischen dem Substrat (10) und dieser Führungsschicht (14) zwischengelagerte Schicht (12) umfasst und das einen Brechungskoeffizienten aufweist, der kleiner ist als der der Führungsschicht (14), bei der Wellenlänge der ausgeübten optischen Strahlung.

4. Verfahren nach einem der Ansprüche 1 bis 3, **dadurch gekennzeichnet, dass** die Führungsschicht (14) einen hohen Koeffizienten n besitzt, in typischer Weise in der Größenordnung von 3 bis 4.

5. Verfahren nach einem der Ansprüche 1 bis 4, **dadurch gekennzeichnet, dass** die Wellenlänge ω der optischen Strahlung, ausgedrückt in cm⁻¹, inbegriffen ist zwischen der transversalen Frequenz ω_{T} und der Längsfrequenz ω_{LO} der unter der Führungsschicht (14) liegenden Schicht (12), das heißt ε₁ (ω) <O und ω_{T} < ω < ω_{LO}.

6. Vorrichtung zur Umsetzung des Verfahrens gemäß einem der Ansprüche 1 bis 5, umfassend:
- mindestens ein Halbleiter-Bauteil, das mindestens von einem Substrat (10) und einem überlagerten Ensemble gebildet wird, das mindestens eine Führungsschicht (14) umfasst, und wobei die Führungsschicht (14) aus Polysilizium ist und auf einer darunter liegenden Schicht (12) aus Siliziumoxid abgelagert, wobei die Führungsschicht (14) eine Dicke in der Größenordnung von 200 bis 400 nm hat, währenddessen die darunter liegende Schicht (12) eine Dicke von mindestens gleich 10 nm hat, und
- Mittel, die imstande sind, auf die Führungsschicht (14) eine optische Strahlung mit einer Wellenlänge in der Größenordnung von 8 µm unter einem Einfall (A) zwischen 70 und 76° inklusive auszuüben, so dass das Ensemble bei dieser Wellenlänge und diesem Einfall einen spezifischen Absorptionspeak aufweist, der geeignet ist, die Führung der optischen Strahlung in der Führungsschicht (14) zu erlauben.

7. Vorrichtung zur Umsetzung des Verfahrens gemäß einem der Ansprüche 1 bis 5, umfassend,
- mindestens ein Halbleiter-Bauteil, das mindestens von einem Substrat (10) und einem überlagerten Ensemble gebildet wird, das mindestens eine Führungsschicht (14) umfasst, und wobei die Führungsschicht (14) aus Polysilizium ist und auf einer darunter liegenden Schicht (12) aus Siliziumnitrid abgelagert, wobei die Führungsschicht (14) eine Dicke in der Größenordnung von 200 bis 400 nm hat, währenddessen die darunter liegende Schicht (12) eine Dicke von mindestens gleich 10 nm hat, und
- Mittel, die imstande sind, auf die Führungsschicht (14) eine optische Strahlung mit einer Wellenlänge in der Größenordnung von 9 µm unter einem Einfall (A) zwischen 70 und 76° inklusive auszuüben, so dass das Ensemble bei dieser Wellenlänge und diesem Einfall einen spezifischen Absorptionspeak aufweist, der geeignet ist, die Führung der optischen Strahlung in der Führungsschicht (14) zu erlauben.

8. Vorrichtung nach einem der Ansprüche 6 oder 7, **dadurch gekennzeichnet, dass** das dem Substrat (10) überlagerte Ensemble (12, 14) die Führungsschicht (14) und mindestens eine zwischen dem Substrat (10) und dieser Führungsschicht (14) zwischengelagerte Schicht (12) umfasst und das einen Brechungskoeffizienten aufweist, der kleiner ist als der der Führungsschicht (14), bei der Wellenlänge der ausgeübten optischen Strahlung.

9. Vorrichtung nach einem der Ansprüche 6 bis 8, **dadurch gekennzeichnet, dass** die Führungsschicht (14) einen hohen Koeffizienten n besitzt, in typischer Weise in der Größenordnung von 3 bis 4.

10. Vorrichtung nach einem der Ansprüche 6 bis 9, **dadurch gekennzeichnet, dass** die Wellenlänge ω der optischen Strahlung, ausgedrückt in cm⁻¹, inbegriffen ist zwischen der transversalen Frequenz ω_{T} und der Längsfrequenz ω_{LO} der unter der Führungsschicht (14) liegenden Schicht (12), das heißt ε₁ (ω)<O und ω_{T} < ω < ω_{LO}.

11. Vorrichtung nach einem der Ansprüche 6 bis 10, **dadurch gekennzeichnet, dass** sie in einem Bereich der Führungsschicht (14) aufgebrachte Elektroden umfasst, um einen Effekt der Fotomodulation hervorzurufen, die an das Vorkommen freier Träger gebunden ist, die in der Führungsschicht vorhanden sind.
